# EUROPEAN PATENT APPLICATION

(11) **EP 1 136 925 A2**
(43) Date of publication of application: **26.09.2001**
(21) Application number: 00123574.6
(22) Date of filing: 27.10.2000
(51) Int. Cl.: G06F 17/60

(54) **Maintenance supporting method and apparatus**

(30) Priority: 24.03.2000 JP 2000088502
(71) Applicant: Hitachi, Ltd., Chiyoda-ku, Tokyo 101-8010 (JP)
(72) Inventor: Niikura, Kazuo, Hitachi-shi, Ibaraki 316-0014 (JP); Shimmei, Katsumasa, Hitachi-shi, Ibaraki 317-0066 (JP)
(74) Representative: Strehl Schübel-Hopf & Partner

(57) **Abstract**

In order to provide a technology instruction supporting apparatus of the actual place constuction works and a supporting method thereof which is possible to advance plural constuction works even if it is in a stage which the constuction works are concentrated on, a database 10 that memorizes the work sequence and the instruction book described by the html file type in the actual place is uploaded in the internet server 3 from a computer 24 of the maker 1 side, and after the contract, the computer of the field 2 side receives the database that memorizes the work sequence and the instruction book by inputting the password, and the field working is performed by the work sequence and instruction book obtained at the actual place.

## Description

### BACKGROUND OF THE INVENTION

The present invention relates to a maintenance supporting method and apparatus using the same realting to a maintenance work procedure / indication, a judgment of working confirmation and maintenance process advance, and a process control, for example, in overhaul engineering works of a machine which makers delivered in an actual place.

Conventionally, maintenance support of this kind is performed by actually dispatching a experienced expert of instruction of the maker to the actual place.

In the method to dispatch the experienced expert of instruction of the maker being an expert to the actual place so as to teach the technology of the maintenance, it is difficult to dispatch the technology instructor being the expert in a stage which the engineering works concentrate, and therefore advance of the engineering works was able to be caused a delay in. Relating to a remote control and monitoring system of a plant such as an electric generator system, US Patent 5,684,718, Japanese Patent Laid-open No. 3-142322, and Japanese Patent Laid-open No. 6-307897 are disclosed. However, they do not disclose any of a maintenance supporting method and apparatus of the plant.

### SUMMARY OF THE INVENTION

The first object of the present invention relates to a maintenance supporting method and an apparatus using the same which is capable of advancing plural workings of the maintenance in the same time even if in a stage which the several workings of the maintenance are concentrated on.

Furthermore, another object of the present invention relates to a maintenance supporting method and an apparatus using the same in which the maintenances are not concentrated on in the same time.

In order to achieve the above object, the present invention provides a maintenance supporting apparatus having a computer of a contract supplier undertaking maintenance of equipment and a computer of maintenance side of said equipment which is connected with said computer of said contract supplier through a network, wherein
said computer of said contract supplier undertaking said maintenance has a database of maintenance data of said equipment which is capble to be referred through said network, and receives a working report data of each phase of said maintenance which is sent by said computer of said maintenance side.

In order to achieve the above object, the present invention provides a maintenance supporting apparatus having a computer of a contract supplier undertaking maintenance of equipment and a computer of maintenance side of said equipment which is connected with said computer of said contract supplier through a network, wherein
said computer of said contract supplier undertaking said maintenance has a database of maintenance data of said equipment which is capble to be referred through said network, and
said database that said maintenance data of said equipment is stored in said computer of said contract supplier is referred from said computer of said maintenance side by using password obtained from said contract supplier.

In order to achieve the above object, the present invention provides a maintenance supporting method characterized by comprising the steps of
uploading maintenance data of an object equipment on an information appliance of an network by a contract supplier of maintenance, when maintenance of an equipment is performed,
obtaining a password from said contract supplier of said maintenance, by a maintenance request side, and
making said maintenance data disclosed to said maintenance request side through said information appliance of said network.
In order to achieve the above object, the present invention provides a maintenance supporting method characterized by comprising the steps of
uploading a maintenance contract condition of an object equipment on an information appliance of an network by a contract supplier of maintenance, when maintenance of an equipment is performed,
transmitting a request signal of said maintenance contract by a maintenance request side to said contract supplier of maintenance through said network after having confirmed said maintenance contract condition, and
disclosing said maintenance data to the maintenance request side through said information appliance of said network after the contract supplier of said maintenance receives said request signal.

### BRIEF DESCRIPTION OF THE DRAWINGS

Figure 1 is a total block-diagram of an actual place constuction works instruciton system which is an embodiment of the present invention.
Figure 2 is a flow chart to apply the actual place constuction works instruciton method of the embodiment of the present invention.
Figure 3 is a figure to show an example of the local work sequence and the instruction book which can be looked at with the internet.
Figure 4 is a flow chart to need a password for refer the actual place constuction works instruciton contents in the embodiment of the present invention.
Figure 5 is a figure to show an example of the display for the computer in the embodiment of the present invention.

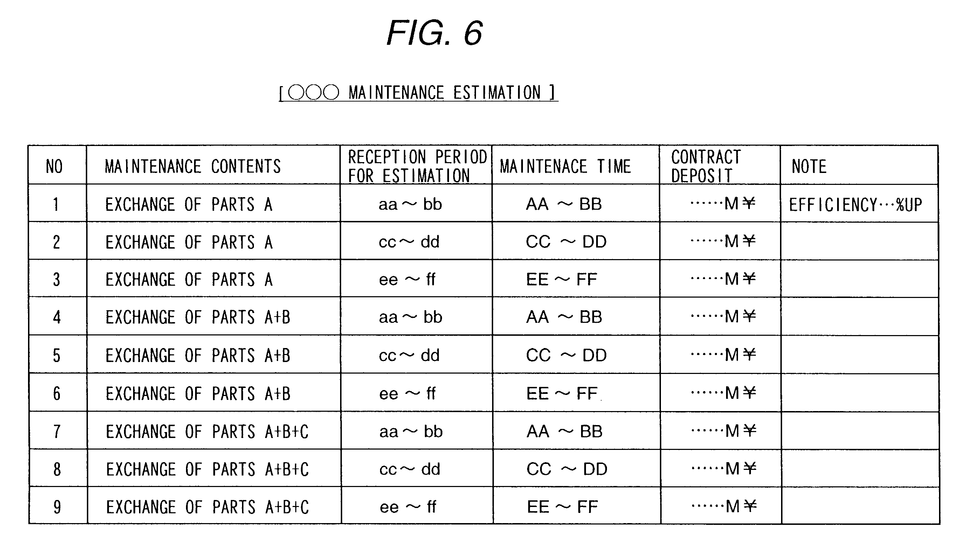

Figure 6 is a figure to show an example of the maintenance condition shown to the user side.

### DETAILED DESCRIPTION OF THE PREFERRED EMBODIMENT

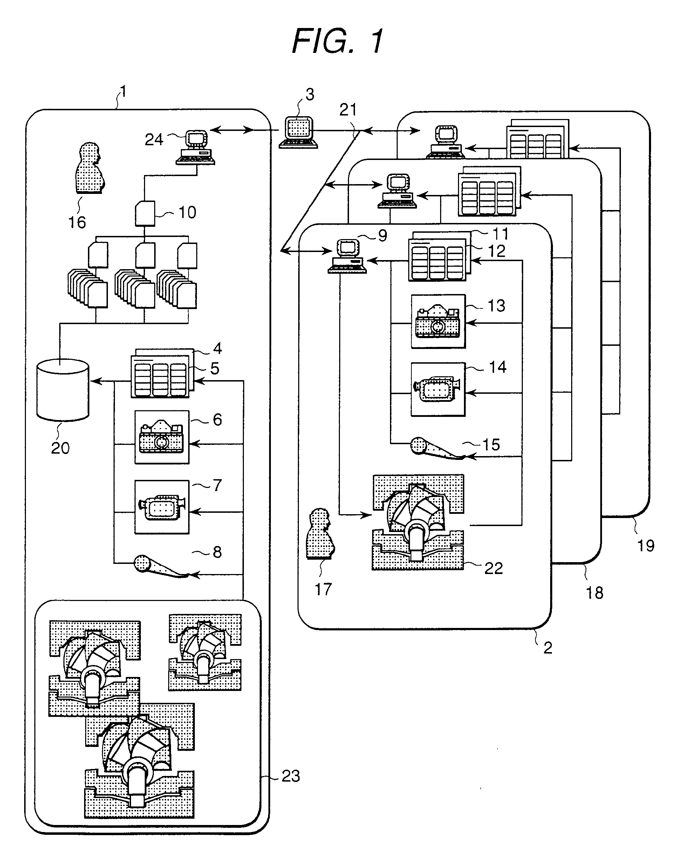

One embodiment of the present invention will be explained using drawings as follows. Figure 1 is one embodiment showing total constitution of the present invention. As shown in figure 1, a maker 1 side which is a contract supplier of a maintenance and a maintenance actual place 2 side of the object equipment which is a request side of the maintenance are connected with a communication line (a network line) through an internet server 3.

In the internet server 3 of the maker 1 side, a text file 4 that progress of similar construction works or progress in the way is memorized, a measurement data file 5 that numeric value list of measurement data iss memorized, a still picture file 6 that a still picture is memorized, a moving image file 7 that a moving image is memorized, an audio file 8 that information about voice is memorized, and a construction work object file 23 that past construction works are memorized are prepared as a database file 20 Because these are described in a html file, the computer 9 provided in the actual place side may read with usual browser software.

In maintenance actual place 2 side, there is plural construction work cites (herein after simply called as construction works), these construction works 18, 19 and the internet server 3 are connected with an internet network 21 (communication line network). In the actual place 2 side, a personal computer 9 stores a text file 11 that data of assembly record measured at the actual place is memorized, a measurement data file 12 that a numeric value list of the measurement data is memorized, a still picture file 13 that still picture of construction work situation filmed with a digital camera is memorized, an action situation of the equipment filmed with a video camera, a moving image file 14 that moving image of situation of vibration is memorized, an audio file 15 that situation of an machine sound is memorized, and a construction work object file 22 that record of the construction work object is memorized.

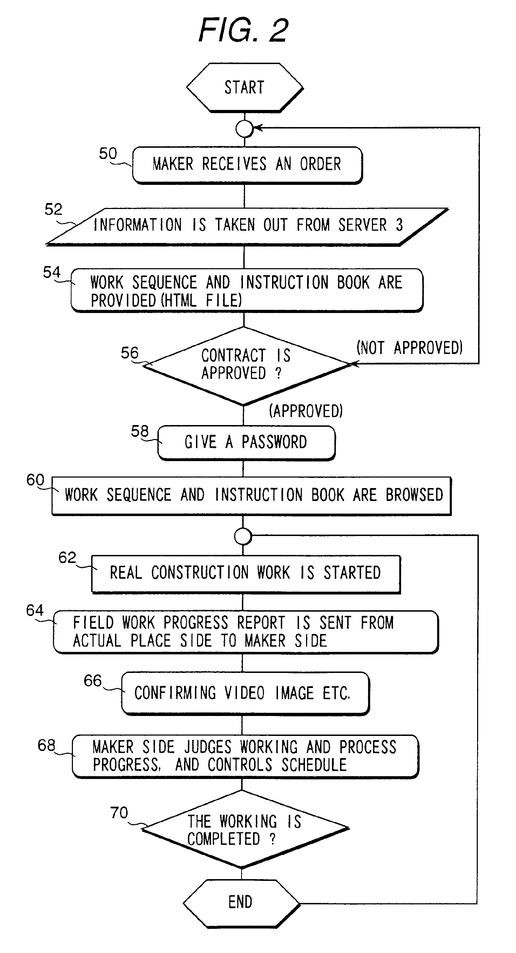

A flow chart of the operation of the maintenance supporting device constituted in this way is shown by figure 2.

The maker 1 side receives an ordering from the maintenance request side before the constuction works is started in a step 50 as shown in figure 2.

In a step 52, the maker 1 side takes out an information to be necessary for the maintenance by referring an information of the constuction works got from internet server 3 and a database file 20.

In a step 54, a database 10 that a work sequence and an instruction book of the actual place described by html file type are memorized is provided in the maker 1 side by adding experience and know how of the experienced expert 17 of instruction based on an information relating to the constuction works, and the database 10 is uploaded in the internet server 3 that can be connected with a communication line.

In a step 56, a contract contents about maintenance constuction works is discussed with maker 1 side and the maintenance request side, and right or wrong of the contract formation is judged.

In a step 58, when a contract is given approval in step 56, the maker 1 side gives a password to browse the work sequence and the instruction book 10 about the constuction works through the internet network (communication line network) 21 to the maintenance request side.

The maintenance request side becomes possible to see the work sequence and the instruction book uploaded in the internet server 3 at any time through the internet network (communication line network) 21.

In a step 60, the work sequence and the instruction book 10 that are uploaded in the internet server 3 are browed by the computer 9 through the internet network (communication line network) 21 using the password obtained in the step 58, the actual place 2 side starts a preparations of the maintenance constuction works ing the field, and in a step 62, the real construction is started according to the work sequence and the instruction book 10.

As shown in a step 64, in an important each phase in the way of the constuction works, a field work progress report that is recorded in a field work advance report which records data of assembly record measured at the actual place in a text file 11 and measurement data numeric value list in a measurement data file 12, if it is necessary, a construction work situation filmed with a digital camera in a still picture files 13, an operation situation or a vibration situation of the equipment filmed with a video system in a moving image files 14, and a situation of sound generated from the equipment in audio file 15, is sent from the maintenance actual place 2 side to the maker 1 side by the person in charge who does the maintenance of the field using the computer 9 through the internet network (communication line network) 21.

In addition, as shown in the step 64, the video image in the real time is transmitted from the actual place 2 side to the maker 1 side, if needed.

In a step 66, an experienced expert 16 of instruction of the maker 1 side watches on a computer 24, an actual place working report of the important each phase in the way of the construction work that has been sent by the actual spot 2 side and the video image which is sent in real time, and judges the working and the process progress, and controls a schedule in a step 68, then in a step 70, an operating from step 62 to step 68 is repeated till the working is completed.

When the contract is undertaken here, and it may be done as follows. A contract deposit, period to completion, contract range to be an adviser of the construction work may be uploaded. The maintenance request side confirms information uploaded in the internet server 3 with a computer 9, and when being judged to fit the requirement, a signal to contract is transmitted to the internet server 3.

When the contract is concluded, the maker 1 side transmits an indication about charging, and the password to browse the work sequence and the instruction book 10 about the construction work is given to the actual place 2 side.

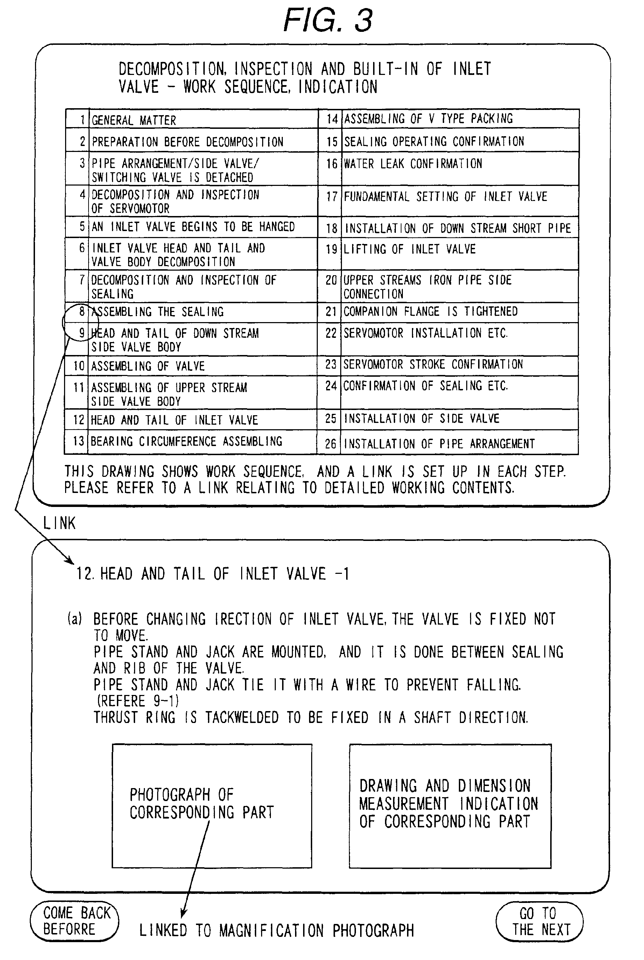

One example of the work sequence and the instruction book 10 is shown in figure 3. A work sequence and an instruction book relating to decomposite inspection and stationary of an inlet valve of a water wheel of hydraulic-power plant extends, mentioned by htm file formation, is shown in figure 3, a detailed activity description is prepared is linking each sequence item, and a detailed activity description is displayed with a photography or a drawing by clicking the sequence item.

As shown in the steps from 58 to 60, in the important each phase in the way of the constuction works, the field work advance report which records data of assembly record measured at the actual place in a text file 11 and measurement data numeric value list in a measurement data file 12, if it is necessary, a construction work situation filmed with a digital camera in a still picture files 13, an operation situation or a vibration situation of the equipment filmed with a video system in a moving image files 14, and a situation of sound generated from the equipment in audio file 15, is sent from the maintenance actual place 2 side to the maker 1 side. The video image in the real time is transmitted from the actual place 2 side to the maker 1 side, if needed.

The experienced expert 16 of instruction in the maker 1 side watches, on the computer 24, the field work report of the each important phase of the constuction works sent from the field 2 side being in the way and the video image sent in real time, working confirmation, judgment of the process advance,and process control are performed.

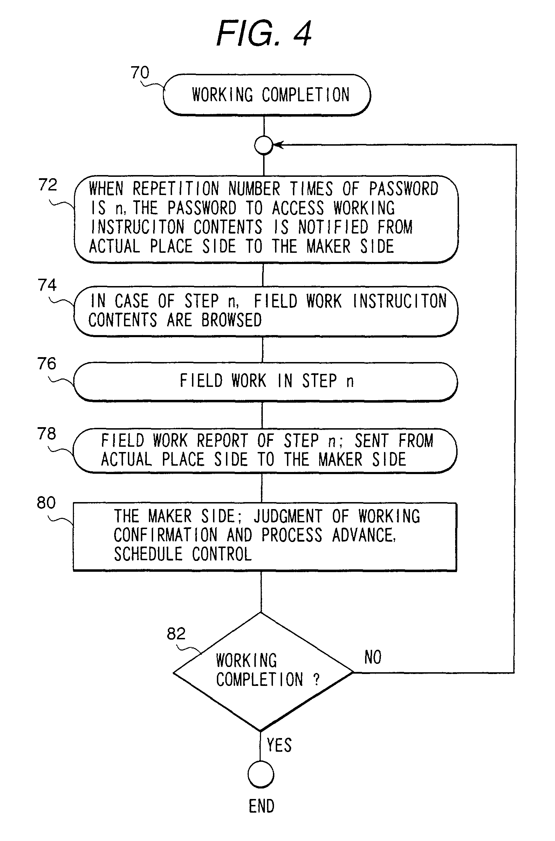

Figure 4 shows an embodiment of a flow chart in which an access password is needed in every repetition steps of the field work when the operator in the field 2 side confirms the work sequence and the instruction book 10.

In this flow chart, an embodiment is shown in which input of the informed password is needed from the maker side in the every steps to repeat each maintenance, when referring a database 10 memorizing the work sequence and the instruction book uploaded in the internet server 3 that can be connected with through the communication line.

This password may be updated according to a time and date performing the maintenance.

In this flow chart as the embodiment, the person in charge who does maintenance of the actual place side 2 is notified the access password from the maker 1 side using a general public line in order to see the work sequence and the instruction book uploaded in the internet server 3 corresponding to the maintenance process in a step 72.

In a step 74, the field work instruciton contents corresponding to the maintenance process is inputted onto a browser software of the computer 9, thereby the person in charge to do the maintenance becomes possible to confirm the working instruciton contents, and in a step 76, the real working is performed according to the working instruciton contents in the step 74.

With step 78, relating to the effect of the maintenance in the step 76, the field work advance report which records data of assembly record measured at the actual place in a text file 11 and measurement data numeric value list in a measurement data file 12, if it is necessary, a construction work situation filmed with a digital camera in a still picture files 13, an operation situation or a vibration situation of the equipment filmed with a video system in a moving image files 14, and a situation of sound generated from the equipment in audio file 15, is sent from the maintenance actual place 2 side to the maker 1 side. In addition, a video image in a real time is transmitted from the actual place 2 side to the maker 1 side if needed.

In a step 80, the working confirmation of the maintenance having been done without a problem, the judgment of the process advance,and process control are performed by judging the contents of the field work advance report given to the experienced expert 16 of instruction in the manufacture 1 side.

In a step 82, by judging whether predetermined necessary maintenance working is completed, if it is judged not to be enough still, the maintenance is repeated by returning to the step 72 again.

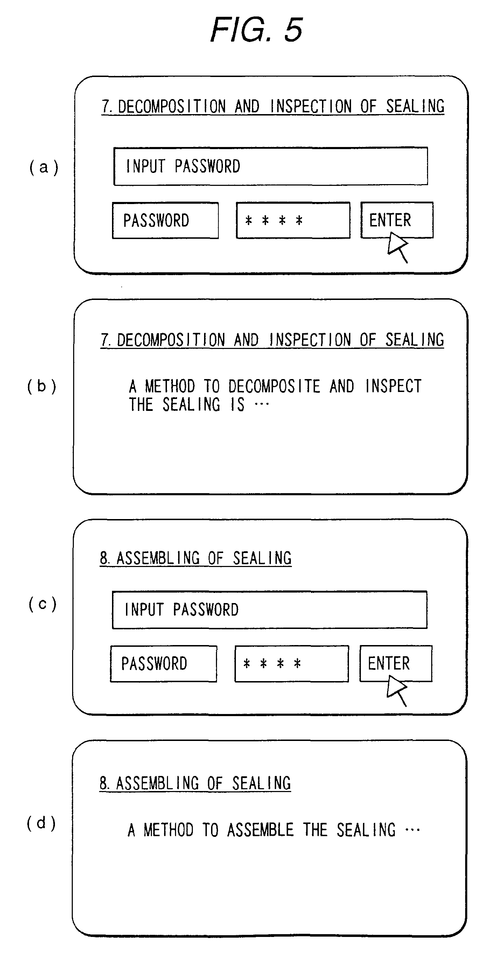

In addition, figure 5 shows an embodiment demanded input of the password in the each maintenance step in decomposition and inspection of the seal ring shown by figure 3.

Figure 5A shows a display screen of the computer 9, which displays a content to demand an input of the password when displaying and confirming the working instruciton contents for the decomposition and the inspection of the seal ring.

Figure 5B shows the working instruciton contents of the decomposition and the inspection of the seal ring which is displayed when a correct password is inputted in figure 5A.

Figure 5C shows a display contents to demand an input of the field work report after the maintenance shown in the steps 78 , 80 of figure 4 and a password for changing to the next maintenance step after the working confirmation and the process advance are finished normally, after the decomposition and the inspection of the seal ring are over.

In this figure 5C, a display content to demand an input of the password is shown when displaying and confirming the working instruciton contents for assembling the seal ring in the next maintenance step.

Figure 5D shows a working instruciton content for assembling the seal ring which are displayed when the correct password is inputted infigure 5C.

In this way, when the next maintenance step is changed from one maintenance step, after having confirmed that the maintenance is over every each maintenance normally by the experienced expert 16 of the instruction, the password to move to the next maintenance step is given, thereby the operator doing the maintenance working at the actual place becomes possible to do the maintenance without error in order, and the experienced expert 16 of the instruction ofthe maker side can realize to advance the maintenance while confirming that maintenance is done surely in the field every each step.

By doing it in this way, the experienced expert of instruction with a limit can instruct the construction work concentrated on a same time at plural places left from the maker side while being in the maker side. In addition, the maker side can refers to the data file which may be a reference relating to the construction work from the various file, and experience of the experienced expert of instruction and a work sequence / an instruction book 10 that know how is added in, are provided before the construction work is started beforehand and are uploaded on the internet server 3 top so as to obtain a high working efficiency.

When necessity to go to the construction works occurred by any chance, the experienced expert of instruction can take a turn for the actual place only a limited period. The experienced expert 17 of instruction to take a turn for the actual place in this case, can instruct plural construction works 18, 19 done at another place in the same time using a computer carried with or the computer 9 of the actual place side.

According to this embodiment stated above, the experienced expert of instruction who does not concentrate on the construction works, may arrange a report consisting of each file provided with past construction working process sent with the internet to be accumulated, and may builds a database for a construction works in the future so as to improve quality of technology instruciton.

A more detailed example of one embodiment of the present invention will be shown by figure 4 in the next place. Figure 4 shows a htm text of a maintenance contract condition uploaded on the internet server top using the maintenance support apparatus stated above which is shown by the maker as a maintenance contract supplier to the maintenance request side, and This htm text is displayed in the maintenance request side by using a browsing software for an information appliance such as a personal computer.

In this display system, every items of the contract condition for a maintenance object equipment, for example, what kind of parts to be changed, maintenance description, estimated receiving period of the maintenance, and a stage to execute the maintenance are displayed, and a contract deposit to execute the maintenance with the above condition is shown.

In this way, even if the maintenance contract side offers the same maintenance content, the maintenance contract side may offer it so as not to concentrate on the same stage if possible and may let the maintenance operation scheduling have a margin by a real maintenance, and the concentration of the maintenance stage gets possible to be prevented by setting the contract deposit of maintenance lower according to the estimate receiving period to be able to keep a better preparations of the maintenance or the maintenance stage which the maintenance does not concentrate on.

According to contents of the maintenance, how the efficiency is improved as a result of the maintenance can be displayed at a stage of the contract.

Furthermore, as an another embodiment of the present invention, the following embodiment configurations can be applied, too.

The maker 1 side prepares a database 10 memorizing the work sequence / the instruction book described by html file type added the experience and know how of the experienced expert 17 of instruction 17, on the basis of information relating to the constuction works referring to database file 20 before starting the maintenance constuction works. This database 10 is recorded in a recording medium of transportable type such as CD-ROM or DVD by setting a protection (coding), this recording medium is supplied to the computer (information appliance) 9 of the actual place 2 side in the maintenance request side.

When a mutual agreement of the maintenance constuction works contract was contracted between the maker 1 side and the maintenance request side, the password to remove the protection (coding) to browse the work sequence and the instruction book about the constuction works stored in the database 10 is given from maker 1 side to the maintenance request side.

The computer 9 of the maintenance actual place 2 side requesting the maintenance browses the work sequence and the instruction book 10 by using the obtained password, and the preparations of the maintenance constuction works can be pushed forward as shown with steps after 55 of the above-mentioned figure 2.

In the maker 1 side furthermore, the same database 10 with that supplied in the maintenance request side is prepared in the information appliance of the computer, an environment which the experienced expert of instruction can be referred to by real time is put in order, and when the maintenance constuction is started, a field work report and a video image sent by the actual place 2 side in the important each phase that the constuction works is in the way are looked at on the computer 9, thereby the working confirmation, the judgment of the process advance, and the process control become possible to be done while sharing the information the same as the actual place 2 side.

In addition to the above, the working which sets the recording medium of the transportable type such as CD-ROM or DVD protected so as to memorize this database 10, may be prepared both of before and after receiving the ordering from the maintenance request side.

According to the embodiment of the present invention stated above, while reducing amount of the data to pass by a way of the internet network (communication line network) 21 if possible, the real maintenance constuction works become possible to be done.

According to the present invention, even if the experienced expert of instruction concentrates to receive many constuction works on one stage, the work sequence and instruction book, the working confirmation and the judgment of the process advance, and the process control become possible to be obtained, in the same way that the experienced expert of instruction takes a turn for the actual place.

In the contract stage of the maintenance, in a maintenance order acceptance period and an execution period, a contract deposit of the maintenance is shown as a discounted test calculation to the maintenance request side by considering the cost reduction obtained by preventing the concentration of the maintenance. Thereby, the maintenance being more inexpensive becomes possible to be supplied to the maintenance request side, and the concentration of the maintenance stage of an veteran operator becomes possible to be prevented.

## Claims

1. A maintenance supporting apparatus having a computer of a contract supplier undertaking maintenance of equipment and a computer of maintenance side of said equipment which is connected with said computer of said contract supplier through a network, wherein
said computer of said contract supplier undertaking said maintenance has a database of maintenance data of said equipment which is capble to be referred through said network, and receives a working report data of each phase of said maintenance which is sent by said computer of said maintenance side.

2. A maintenance supporting apparatus having a computer of a contract supplier undertaking maintenance of equipment and a computer of maintenance side of said equipment which is connected with said computer of said contract supplier through a network, wherein
said computer of said contract supplier undertaking said maintenance has a database of maintenance data of said equipment which is capble to be referred through said network, and
said database that said maintenance data of said equipment is stored in said computer of said contract supplier is referred from said computer of said maintenance side by using password obtained from said contract supplier.

3. A maintenance supporting method **characterized by** comprising the steps of
uploading maintenance data of an object equipment on an information appliance of an network by a contract supplier of maintenance, when maintenance of an equipment is performed,
obtaining a password from said contract supplier of said maintenance, by a maintenance request side, and
making said maintenance data disclosed to said maintenance request side through said information appliance of said network.

4. A maintenance supporting method as defined in claim 3, **characterized by** comprising
a computer of a maintenance field side of said equipment connected to a computer of said contract supplier through said network, wherein
a process control is performed by receiving field work report data of each phase of said maintenance that is sent from a computer of said maintenance field side with said computer of said contract supplier.

5. A maintenance supporting method **characterized by** comprising the steps of
uploading a maintenance contract condition of an object equipment on an information appliance of an network by a contract supplier of maintenance, when maintenance of an equipment is performed,
transmitting a request signal of said maintenance contract by a maintenance request side to said contract supplier of maintenance through said network after having confirmed said maintenance contract condition, and
disclosing said maintenance data to the maintenance request side through said information appliance of said network after the contract supplier of said maintenance receives said request signal.

6. A maintenance supporting method as defined in claim 5, wherein
said contract supplier of maintenance uploads said maintenance condition of said object equipment on said information appliance of said network as a maintenance contract condition of said object equipment.

7. A maintenance supporting method as defined in claim 5, wherein
said contract supplier of maintenance uploads said maintenance condition of said object equipment on a maintenance execution day on said information appliance of said network as a maintenance contract condition of said object equipment.

8. A maintenance supporting method as defined in claim 5, wherein
said contract supplier of maintenance uploads said maintenance condition of said object equipment on a maintenance execution day on said information appliance of said network as a maintenance contract condition of said object equipment.

9. A maintenance supporting method as defined in claim 5, wherein
said maintenance data is formed by html file type.
